# EUROPÄISCHE PATENTANMELDUNG

(11) **EP 0 586 753 A1**
(43) Veröffentlichungstag der Anmeldung: **16.03.1994**
(21) Anmeldenummer: 92250226.5
(22) Anmeldetag: 25.08.1992
(51) Int. Cl.: H01B 3/04, H01B 3/08, H01B 3/30

(54) **Isolierband für einer Wicklung eine elektrischen Maschine**

(71) Anmelder: SIEMENS AKTIENGESELLSCHAFT, D-80333 München (DE)
(72) Erfinder: Swiatkowski, Gernot, Dr., W-1000 Berlin 13 (DE); Olbrich, Irene, W-1000 Berlin 20 (DE)

(57) **Zusammenfassung**

Ein Isolierband für eine Wicklung einer elektrischen Maschine, insbesondere einer rotierenden Maschine, besteht aus einem elektrisch durchschlagfestem Material wie beispielsweise Glimmer, einem Trägermaterial wie beispielsweise Glasseide und einem thermoplastischem Kleber, der das Isolierband zusammenhält. Der Kleber besteht erfindungsgemäß aus einem Thermoplast, dessen Dauergebrauchstemperatur unterhalb derjenigen Wärmeklasse liegt, für die die Wicklung vorgesehen ist. Dennoch weist die Isolierung der Maschine nach dem Imprägnieren der Wicklungsisolierung mit einem härtbaren Harz die notwendige mechanische und elektrische Stabilität auf.

## Beschreibung

Die Erfindung bezieht sich auf ein Isolierband für Wicklungen von elektrischen Maschinen, wobei die Wicklungen für eine erste Wärmeklasse vorgesehen sind, zur Imprägnierung mit einem Harz und zur anschließenden Härtung, bestehend aus einem Trägermaterial, einem elektrisch durchschlagfesten Material beispielsweise Glimmer und einem thermoplastischen Kleber.

Ein derartiges Isolierband ist beispielsweise aus der DE-AS 12 73 647 bekannt. Demgegenüber soll gemäß der DE-AS allerdings durch Verwendung eines vulkanisierbaren Klebers eine größere mechanische Festigkeit und bessere elektrische Durchschlagfestigkeit erreicht werden.

Aus der DE-U 89 05 612.4 ist ein Isolierband mit einem thermoplastischen Kleber bekannt, der aus einem Polyethersulfon oder einem Polyetherimid besteht. Der Nachteil dieser thermoplastischen Stoffe besteht darin, daß sie entweder zum Aufbringen auf das Band stark erhitzt werden oder zum Aufsprühen auf das Band mit besonderen Lösungsmitteln gelöst werden müssen.

Aus dem US-Patent 3,495,984 sowie dem US-Patent 3,586,557 ist es bereits bekannt, für ein Isolierband einen thermoplastischen Kleber in Form einer Folie zu verwenden, wobei eine Folie verwendet wird, die sich nach dem Aufwickeln auf einen Leiter beim Erwärmen zusammenzieht, so daß Durchtrittsöffnungen für ein Imprägnierharz zwischen den verschiedenen Lagen des Isolierbandes gebildet werden.

Aus der DE-OS 31 21 725 ist die Verwendung verschiedener Thermoplaste in Folienform als Isolierschicht zwischen den Windungen einer elektrischen Maschine bekannt. Die Thermoplastfolie bildet dort selbst das isolierende Medium, es ist daher keine zusätzliche Glimmerschicht vorgesehen. Als Materialien werden beispielsweise Polyamide, Polyimide sowie Polyester vorgeschlagen.

Es ist dort allerdings ausdrücklich betont, daß bei der Auswahl der entsprechenden Thermoplastfolie für eine elektrische Maschine die Wärmebeständigkeit des Folienmaterials entsprechend der Wärmeklasse der zu isolierenden Maschine gewählt werden muß.

Der vorliegenden Erfindung liegt die Aufgabe zugrunde, für ein Isolierband der eingangs genannten Art einen Kleber bereitzustellen, der bei niedrigen Temperaturen leicht zu verarbeiten sowie ungiftig und kostengünstig ist und der gegebenenfalls in konventionellen, ungiftigen Lösungsmitteln löslich ist.

Die Aufgabe wird erfindungsgemäß dadurch gelöst, daß bei einem Isolierband der eingangs genannten Art der Kleber im wesentlichen aus einem Stoff besteht, dessen maximale Dauergebrauchstemperatur für sich mindestens eine Wärmeklasse unterhalb der oberen Grenztemperatur der ersten Wärmeklasse liegt.

Unter der maximalen Dauergebrauchstemperatur eines Stoffes wird in diesem Zusammenhang die höchste Temperatur verstanden, bei der ein Stoff dauerhaft belastet werden kann, ohne seine mechanischen und elektrischen Eigenschaften grundlegend zu verändern.

Unter den Wärmeklassen werden die Wärmeklassen gemäß der IEC-Norm 85 verstanden.

Ein solcher Kleber kann ohne größeren Aufwand mit einem Band aus einem elektrisch durchschlagfestem Material, beispielsweise Glimmer sowie einem Band aus einem Träger- bzw. Verstärkungsmaterial, beispielsweise Glasseide, bei niedrigen Temperaturen kalandriert werden. Es ist aber auch denkbar, den Kleber in einem konventionellen Lösungsmittel zu lösen und entweder auf das Band aus einem durchschlagfestem Material oder auf das Band aus einem Trägermaterial oder auf beide Bänder aufzusprühen. Die in Frage kommenden thermoplastischen Materialien sind, da an sie bezüglich der Dauergebrauchstemperatur keine erhöhten Anforderungen gestellt werden, relativ preiswert. Außerdem sind die Kleber über einen großen Zeitraum haltbar und flexibel, d. h. einfach verarbeitbar.

Nach dem Aufbringen des Isolierbandes auf eine Wicklung, dem Imprägnieren mit einem Harz und dem Aushärten hat die Wicklungsisolierung trotz der niedrigen Dauergebrauchstemperatur des Klebermaterials auch oberhalb dieser Temperatur die für die Maschine geforderte elektrische und mechanische Festigkeit.

Die Erfindung kann vorteilhaft dadurch ausgestaltet werden, daß der Kleber im wesentlichen aus einem Polyurethan, einem gesättigten Polyester, einem Polyacrylat, einem Polymethacrylat , einem Styrolpolymerisat, einem Polyamid, einem Polyvinyläther, einem Polyvinylacetat oder einem Polyesterimid, bzw. aus einer Mischung mehrer dieser Stoffe besteht.

Die genannten Stoffe weisen allesamt außer den weiter oben angeführten Eigenschaften eine gute Klebefähigkeit auf.

Eine weitere vorteilhafte Ausgestaltung der Erfindung sieht vor, daß der Kleber mit einem Beschleuniger vermischt ist.

Der Beschleuniger sorgt dafür, daß ein Imprägnierharz, mit dem das Isolierband nach dem Aufbringen auf die Wicklung imprägniert wird, im Bereich des Isolierbandes selbst schnell ausgehärtet wird. Durch das gemeinsame Aufbringen des Beschleunigers mit dem Kleber wird ein zusätzlicher Verfahrensschritt zum Aufbringen des Beschleunigers eingespart.

Außerdem kann die Erfindung vorteilhaft dadurch ausgestaltet werden, daß ein Beschleuniger unabhängig vom Kleber auf das Isolierband aufgebracht ist.

Dies kann insbesondere dann wichtig sein, wenn der Beschleuniger für sich unabhängig vom Kleber dosierbar sein soll.

Eine weitere vorteilhafte Ausgestaltung der Erfindung sieht vor, daß der Beschleuniger tertiäre Amine, Imidazole, quartäre Amoniumsalze, Lewissäuren, Lewisbasen, Phosphoniumsalze, Piperazine, metallorganische Verbindungen oder eine Mischung von mehreren dieser Stoffe enthält.

Die Erfindung bezieht sich außerdem auf die Verwendung eines thermoplastischen Stoffes mit einer bestimmten maximalen Dauergebrauchstemperatur als Kleber für ein mit einem härtbaren Harz zu imprägnierendes, ein durchschlagfestes Material und ein Trägermaterial enthaltendes Isolierband zur Isolierung elektrischer Wicklungen, die für eine Wärmeklasse bestimmt sind, die oberhalb der maximalen Dauergebrauchstemperatur des thermoplastischen Stoffes liegt.

Die Erfindung bezieht sich weiterhin in konkreterer Form auf die Verwendung von einem Polyurethan, einem gesättigten Polyester, einem Polyacrylat, einem Polymethacrylat, einem Styrolpolymerisat, einem Polyamid, einem Polyvinyläther, einem Polyvinylacetat oder einem Polyesterimid bzw. einer Mischung mehrer dieser Stoffe als Kleber für ein Isolsierband zur Isolierung elektrischer Wicklungen der Wärmeklasse H oder einer höheren Wärmeklasse.

Elektrische Maschinen können dabei beispielsweise Motoren, Generatoren oder Transformatoren sein.

Weiterhin bezieht sich die Erfindung auf eine elektrische Maschine mit einer Wicklung die unter Verwendung eines erfindungsgemäßen Isolierbandes isoliert ist.

Die Erfindung wird anschließend anhand eines Ausführungsbeispieles ausführlicher erläutert:
Aus Glimmer, Glasseide und einem thermoplastischen Polyurethankleber (Desmocoll 176 der Firma Bayer) werden mittels einer Kaschiermaschine Glimmerbänder hergestellt. Dabei wird der Kleber als Lösung auf das Glimmerpapier aufgebracht und dieses anschließend mit der Glasseide zusammengeführt. Eingesetzt wurde eine Lösung mit 13 Gew% des Polyurethanklebers in Methylethylketon. Der Klebeauftrag beträgt ca. 12 g/m². Für die Teilleiterisolierung wurde ein Phlogopit-Glimmer mit einem Flächengewicht von 90 g/m² für die Hauptisolierung ein Muskovitglimmer mit einem Flächengewicht von 160 g/m² verwendet.

### Ermittlung des Gewichtsverlustes von imprägnierten Glimmerbandlaminaten

Der Gewichtsverlust wird an Glimmerbandlaminaten ermittelt, die nach Vakuumimprägnierungstechnik mit einem Isocyanat/Epoxid-Tränkharz bei 80 ^{o}C imprägniert wurden. Dazu wird 24 mm breites Glimmerband mit Beschleuniger BCL₃DMBA (Konzentration 0,5 g/m²) beschichtet und mittels des Polyurethanklebers Desmocoll 176 der Firma Bayer mit einem Glasseidengewebe verklebt. Es werden Probekörper aus 12 Lagen Glimmerband mit einer Länge von 16 cm hergestellt.

Die imprägnierten Laminate werden über 64 Wochen unter Stickstoff bei 180, 200 und 220 ^{o}C gelagert.

Es wurden folgende Gewichtsverluste, bezogen auf den Tränkharz/Klebharzanteil ermittelt (in Gewichtsprozent):

| Lagerungstemp. | 1 Wo. | 4 Wo. | 16 Wo. | 32 Wo. |
|---|---|---|---|---|
| 180 ^{o}C | 0,08 | 0,14 | 0,31 | 0,64 |
| 200 ^{o}C | 0,15 | 0,35 | 1,30 | 2,04 |
| 220 ^{o}C | 0,53 | 1,55 | 3,47 | 5,52 |

Bei Lagertemperaturen von 180 bzw. 200 ^{o}C hielt sich der Gewichtsverlust in vertretbaren Grenzen. Das Laminat bleibt außerdem mechanisch stabil und wies in diesem Temperaturbereich die für den Einsatz als Isolierung notwendigen mechanischen und elektrischen Stabilitätseigenschaften auf. Damit ist der Polyurethankleber Desmocoll 176 für Wicklungen der Wärmeklasse H einsetzbar, obwohl er selbst eine maximale Dauergebrauchstemperatur von nur etwa 90 ⁰C aufweist.

## Patentansprüche

1. Isolierband für Wicklungen von elektrischen Maschinen, wobei die Wicklungen für eine erste Wärmeklasse vorgesehen sind, zur Imprägnierung mit einem Harz und zur anschließenden Härtung, bestehend aus einem Trägermaterial, einem elektrisch durchschlagfesten Material und einem thermoplastischen Kleber,
**dadurch gekennzeichnet,** daß
der Kleber im wesentlichen aus einem Stoff besteht, dessen maximale Dauergebrauchstemperatur für sich mindestens eine Wärmeklasse unterhalb der oberen Grenztemperatur der ersten Wärmeklasse liegt.

2. Isolierband nach Anspruch 1,
**dadurch gekennzeichnet,** daß
der Kleber im wesentlichen aus einem Polyurethan, einem gesättigten Polyester, einem Polyacrylat, einem Polymethacrylat, einem Styrolpolimerisat, einem Polyamid, einem Polyvinyläther, einem Polyvinylacetat oder einem Polyesterimid, bzw. aus einer Mischung mehrer dieser Stoffe besteht.

3. Isolierband nach Anspruch 1 oder 2,
**dadurch gekennzeichnet,** daß
der Kleber mit einem Beschleuniger vermischt ist.

4. Isolierband nach Anspruch 1 oder 2,
**dadurch gekennzeichnet,** daß
ein Beschleuniger getrennt vom Kleber auf das Isolierband aufgebracht ist.

5. Isolierband nach Anspruch 3 oder 4,
**dadurch gekennzeichnet,** daß
der Beschleuniger tertiäre Amine, Imidazole, quartäre Ammoniumsalze, Lewissäuren, Lewisbasen, Phosphoniumsalze, Piperazine, metallorganische Verbindungen oder eine Mischung mehrer dieser Stoffe enthält.

6. Verwendung eines thermoplastischen Stoffes mit einer bestimmten maximalen Dauergebrauchstemperatur als Kleber für ein mit einem härtbaren Harz zu imprägnierendes, ein durchschlagfestes Material und ein Trägermaterial enthaltendes Isolierband zur Isolierung elektrischer Wicklungen, die für eine Wärmeklasse bestimmt sind, die oberhalb der maximalen Dauergebrauchstemperatur des thermoplastischen Stoffes liegt.

7. Verwendung von einem Polyurethan, einem gesättigten Polyester, einem Polyacrylat, einem Polymethacrylat, einem Styrolpolymerisat, einem Polyamid, einem Polyvinyläther, einem Polyvinylacetat oder einer Polyesterimid bzw. einer Mischung mehrer dieser Stoffe als Kleber für ein Isolsierband zur Isolsierung elektrischer Wicklungen der Wärmeklasse H oder einer höheren Wärmeklasse.

8. Elektrische Maschine mit einer Wicklung, die unter Verwendung eines Isolierbandes isoliert ist,
**dadurch gekennzeichnet,** daß
die Wicklung ein Isolierband gemäß einem der Ansprüche 1 bis 5 enthält.
